# EUROPEAN PATENT APPLICATION

(11) **EP 4 365 987 A1**
(43) Date of publication of application: **08.05.2024**
(21) Application number: 23203632.7
(22) Date of filing: 13.10.2023
(51) Int. Cl.: H01M 4/1393, H01M 4/1395, H01M 4/36, H01M 4/583, H01M 10/052, H01M 4/02

(54) **NEGATIVE ACTIVE MATERIAL FOR RECHARGEABLE LITHIUM BATTERY, AND NEGATIVE ELECTRODE AND RECHARGEABLE LITHIUM BATTERY INCLUDING SAME**

(30) Priority: 03.11.2022 KR 20220145321
(71) Applicant: Samsung SDI Co., Ltd., Yongin-si, Gyeonggi-do 17084 (KR)
(72) Inventor: PARK, Sunil, 17084 Yongin-si (KR); KIM, Young-Min, 17084 Yongin-si (KR); KIM, Youngugk, 17084 Yongin-si (KR); SHIN, Changsu, 17084 Yongin-si (KR); OH, Doori, 17084 Yongin-si (KR); WON, Jongmin, 17084 Yongin-si (KR); LEE, Dae-Hyeok, 17084 Yongin-si (KR); JUNG, Sungwon, 17084 Yongin-si (KR)
(74) Representative: Marks & Clerk LLP

(57) **Abstract**

Disclosed are a negative active material for a rechargeable lithium battery, a negative electrode including the same, and a rechargeable lithium battery including the same. The negative active material includes a silicon-carbon composite in which crystalline carbon, silicon particles, and amorphous carbon are agglomerated; and single-walled carbon nanotubes coated on the silicon-carbon composite.

## Description

### BACKGROUND OF THE INVENTION

### (a) Field of the Invention

Embodiments of the present disclosure relate to a negative active material for a rechargeable lithium battery, and a negative electrode and a rechargeable lithium battery including the same.

### (b) Description of the Related Art

Recently, the rapid supplement of electronic devices such as mobile phones, laptop computers, and electric vehicles using batteries require surprising increases in demand for rechargeable batteries with relatively high capacity and lighter weight. Particularly, a rechargeable lithium battery has recently drawn attention as a driving power source for portable devices, as it has lighter weight and high energy density. Accordingly, researches and development for improving performances of a rechargeable lithium battery are being actively conducted.

A rechargeable lithium battery includes a positive electrode and a negative electrode which may include an active material being capable of intercalating and deintercalating lithium ions, and an electrolyte, and generate electrical energy due to an oxidation and reduction reaction when lithium ions are intercalated and deintercalated into the positive electrode and the negative electrode.

As a positive active material of a rechargeable lithium battery, transition metal compounds such as lithium cobalt oxides, lithium nickel oxides, and lithium manganese oxide are mainly used. As the negative active material, a carbonaceous material such as a crystalline carbon-based material such as natural graphite or artificial graphite, or an amorphous carbon-based material may mainly be used, but the carbonaceous material has a low capacity of 360 mAh/g, and thus, the investigation for the silicon-based active material such as Si having a capacity of four times or more than that has been actively undertaken.

However, the silicon-based active material has higher volume expansion (about 300%) than the carbon-based material such as graphite during charging and discharging, which causes deterioration to occur due to the consumption of the electrolyte, and thus, it is limited to practical use. The repeated volume expansion and contraction of the silicon-based active material breaks the conductive network, resulting in deteriorating cycle-life characteristics.

For solving such problems, the investigation has been conducted on nano-sizing the silicon-based active material, or complexing by agglomerating silicon and carbon into secondary particles, but it has been difficult to completely solve the problems caused by the continuous increase in SEI and the breakage of the conductive network.

### SUMMARY

One embodiment provides a negative active material for a rechargeable lithium battery exhibiting improved cycle-life characteristics and high-rate capability.

Another embodiment provides a negative electrode for a rechargeable lithium battery including the negative active material.

Still another embodiment provides a rechargeable lithium battery including the negative electrode.

One embodiment provides a negative active material for a rechargeable lithium battery including a silicon-carbon composite in which crystalline carbon, silicon particles, and amorphous carbon are agglomerated; and single-walled carbon nanotubes coated on the silicon-carbon composite.

The single-walled carbon nanotubes may be presented (e.g. present) in an amount of about 0.01 wt% to about 0.5 wt% based on 100 wt% of the total weight of the negative active material.

The single-walled carbon nanotubes may have an average length of about 0.5 µm to about 10 µm.

The single-walled carbon nanotubes may be coated on a surface of the silicon-carbon composite at a thickness of about 0.2 µm to about 10 µm.

The silicon-carbon composite may include an agglomerated product in which the crystalline carbon and the silicon particles are agglomerated and the amorphous carbon is between and/or covers a surface of the agglomerated product.

Another embodiment provides a negative electrode for a rechargeable lithium battery, including a negative active material layer consisting of a negative active material and a binder, wherein the negative active material comprises the negative active material of the invention, and a current collector supporting the negative active material layer.

Still another embodiment provides a rechargeable lithium battery including the negative electrode; a positive electrode, and an electrolyte.

At least some of the above and other features of the invention are set out in the claims.

The negative active material according to some embodiments may exhibit excellent cycle-life characteristic and high-rate capability.

### BRIEF DESCRIPTION OF THE DRAWINGS

FIG. 1 is a schematic diagram showing a rechargeable lithium battery according to one embodiment.
FIG. 2 is a graph showing the cycle-life characteristics of the cells according to Example 1 and Comparative Examples 1 and 2.

### DETAILED DESCRIPTION

Hereinafter, embodiments of the present invention are described in detail. However, these embodiments are merely examples, the present invention is not limited thereto, and the present invention is defined by the scope of claims.

In the specification, when a definition is not otherwise provided, such a particle diameter (D50) indicates an average particle diameter (D50) where a cumulative volume is about 50 volume% in a particle distribution. The average particle size (D50) may be measured by a method well known to those skilled in the art, for example, by a particle size analyzer, or by a transmission electron microscopic image, or a scanning electron microscopic image. In some embodiments, a dynamic light-scattering measurement device is used to perform a data analysis, and the number of particles is counted for each particle size range, and from this, the average particle diameter (D50) value may be easily obtained through a calculation.

A negative active material for a rechargeable lithium battery according to embodiments includes a silicon-carbon composite in which crystalline carbon, silicon particles, and amorphous carbon are agglomerated; and single-walled carbon nanotubes coating the silicon-carbon composite.

In some embodiments, the coating may have a layer shape, an island shape, or a dot shape. For example, as long as the single-walled carbon nanotubes are positioned on a surface of the silicon-carbon composite, the coating may be any shape. In some embodiments, the single-walled carbon nanotube may be substantially and continuously coated the surface of the silicon-carbon composite, for example, to form a layer shape, or it may discontinuously coat to form an island or a dot shape.

The silicon-carbon composite may be an agglomerated product of a crystalline carbon, silicon particles, and an amorphous carbon, and if it is illustrated in more detail therefor, the silicon-carbon composite may include agglomerated products in which the crystalline carbon and the silicon particles are agglomerated and the amorphous carbon is between the agglomerated products and/or covers surfaces of the agglomerated products. In another embodiment, the silicon-carbon composite may include secondary particles, for example, an agglomerated product, in which primary particles of at least one silicon nanoparticles are agglomerated, a crystalline carbon coated on the agglomerated product, and an amorphous carbon coated on a surface of the agglomerated product.

The amorphous carbon may include soft carbon, hard carbon, mesophase pitch carbide, sintered cokes, or combinations thereof. The crystalline carbon may include natural graphite, artificial graphite, or combinations thereof.

In the silicon-carbon composite, an amount of the silicon particles may be about 1 wt% to about 60 wt% based on the total 100 wt% of the silicon-carbon composite, or according to another embodiment, may be about 3 wt% to about 60 wt% based on 100 wt% of the silicon-carbon composite. In the silicon-carbon composite, an amount of the amorphous carbon may be about 20 wt% to about 60 wt% based on the total 100 wt% of the silicon-carbon composite, and an amount of the crystalline carbon may be about 20 wt% to about 60 wt% based on the total 100 wt% of the silicon-carbon composite.

The silicon particle may have a particle diameter of about 10 nm to about 30 µm, and according to one embodiment, may be about 10 nm to about 1000 nm, or according to another embodiment, may be about 20 nm to about 150 nm.

If the amorphous carbon is positioned to cover the surface of the secondary particles, the thickness may be appropriately adjusted, but for example, may be about 5 nm to about 100 nm.

Such a ternary silicon-carbon composite including a crystalline carbon, an amorphous carbon, and silicon may exhibit improved battery conductivity characteristics, owing to the inclusion of carbon, and according to embodiments, the pores which may formed inside of the agglomerated products may be filled with carbon which renders to make a dense structure, and thus, the direct contact of the electrolyte with silicon inside of the agglomerated products may be prevented. The collapse of the conductive network caused by the volume expansion and contraction during charging and discharging may be generally occurred. However, the negative active material according to some embodiments may prevent the collapse of the conductive network by coating the silicon-carbon composite with the single-walled carbon nanotubes, thereby improving the cycle-life characteristics. Such prevention effects of the collapse of the conductive network may be only realized from coating on the single-walled carbon nanotube coating, and may be not realized from coating with a multi-walled carbon nanotubes. This is because the lower flexibility of the multi-walled carbon nanotubes than the single-walled carbon nanotubes may not prevent the collapse of the conductive network.

If the silicon-carbon composite is coated with an amorphous carbon, the improvements in the cycle-life characteristics by the prevention of the collapse of the conductive network may be insignificant, because particles may be not contacted therewith by deteriorating due to the frequent contraction and expansion.

In the ternary silicon-carbon composite, the single-walled carbon nanotubes may form a continuous conductive network between the internal carbon (e.g., graphite) and the external carbon (e.g., graphite), and thus, the electrical conductivity may be continuously maintained. However, the coating of the single-walled nanotubes on silicon oxide such as SiOₓ, or a single Si may not prevent the collapse of the conductive network, because the silicon oxide or the single Si does not include internal graphite, which results in the decrease in the electrical conductivity due to the occurrence of cracks from contraction and expansion during charging and discharging, and thus, the improvements in the cycle-life characteristics may be not obtained.

In one embodiment, an amount of the single-walled carbon nanotubes may be about 0.01 wt% to about 0.5 wt%, about 0.02 wt% to about 0.5 wt%, about 0.05 wt% to about 0.5 wt%, about 0.05 wt% to about 0.3 wt% based on the total 100 wt% of the negative active material. If the amount of the single-walled carbon nanotubes is within the range, the isolation due to the deterioration of Si may be prevented.

In some embodiments, the single-walled carbon nanotubes act as a conductive material, so that as described above, even if the single-walled nanotubes are included in a much smaller amount than the conventional conductive material, it may impart the suitable conductivity to the negative active material.

This is because the single-walled carbon nanotubes are used for the negative electrode by coating the silicon-carbon composite and thus, the carbon nanotubes are only presented around the silicon-carbon composite, so that the small amount may impart the sufficient conductivity to the negative active material. Whereas, if the single-walled carbon nanotubes are simply mixed rather than coated on the silicon-carbon composite, for example, the single-walled carbon nanotubes are used to mix the silicon-carbon composite, the single-walled carbon nanotubes, and a binder in a solvent in a negative active material layer slurry preparation, the single-walled nanotubes with the small amounts as similar to the one embodiment, may exhibit insufficiently conductivity, and thus, the high-rate capability may be surprisingly deteriorated.

The single-walled carbon nanotubes may have an average length of about 0.5 µm to about 10 µm, about 0.5 µm to about 5 µm, or about 0.5 µm to about 3 µm. The average length of the single-walled carbon nanotubes does not mean only the complete straight length, and even if the single-walled carbon nanotubes existing in the negative active material are bent, it may be a length corresponding to the long axis. If the average length of the single-walled carbon nanotubes is within the range, good contact between particles may be achieved without aggregation and no isolation in the negative electrode.

In some embodiments, the single-walled carbon nanotubes may be coated on the surface of the silicon-carbon composite with a thickness of about 0.2 µm to about 10 µm, about 0.2 µm to about 8 µm, about 0.2 µm to about 6 µm, or about 0.2 µm to about 4 µm. The coating of the single-walled carbon nanotubes with the thickness may impart good contact between the particles, thereby improving long cycle-life characteristics. In some embodiments, the average length and thickness of single-walled carbon nanotubes may be measured by SEM images, for example, they may be measured by SEM images using the Hitachi S-4800.

Such a negative active material according to embodiments may be prepare by the following procedures.

Silicon particles with micrometer sizes are mixed with an organic solvent to prepare a silicon dispersed liquid. The mixing process may be performed by a milling process to reduce the size of the silicon particles from micrometers to nanometers, thereby obtaining silicon nanoparticles. The milling process may be performed by a bead mill or a ball mill.

The solvent may suitably be solvents which do not oxidize the silicon particle and may be readily volatilized, and the example may be isopropyl alcohol, ethanol, methanol, butanol, N-methyl pyrrolidone, propylene glycol, or combinations thereof.

A mixing ratio of the silicon particles and the organic solvent may be about 70:30 by weight ratio to about 90:10 by weight ratio, or about 70:30 by weight ratio to about 80:20 by weight ratio. If the mixing ratio of the silicon particle and the organic solvent is satisfied into the range, the size of the silicon particles may be rapidly reduced and the oxidation may be prevented.

To the silicon dispersed liquid, a crystalline carbon is added and mixed. A mixing ratio of the silicon and the crystalline carbon may be about 90:10 by weight ratio to about 80:20 by weight ratio. If the mixing ratio of the silicon and the crystalline carbon is within the range, the excellent cycle-life characteristics may be exhibited.

The crystalline carbon may include natural graphite, artificial graphite, or combinations thereof.

The resulting mixture is spray-dried to prepare a Si precursor. The spray-drying may be performed at about 50 °C to about 150 °C. The spray-drying may render to agglomerate primary particles which are silicon nano particles to prepare secondary particles.

If the spray-drying is performed at the temperature range, the agglomeration of primary particles to form secondary particles may be suitably performed.

The Si precursor is mixed with an amorphous carbon precursor.

A mixing ratio of the Si precursor and the amorphous carbon precursor may be about 50:50 to 70:30 by weight ratio. If the mixing ratio of the Si precursor and the amorphous carbon precursor is within the range, the amorphous carbon is not included in an excessive amount in the final negative active material, and an amorphous carbon layer is not separately on the surface of the final negative active material, so that the suitable utilization of silicon may be obtained, thereby exhibiting excellent initial efficiency.

The amorphous carbon precursor may include coal pitch, mesophase pitch, petroleum pitch, meso carbon pitch, meso pitch, coal-based oil, petroleum-based heavy oil, or a polymer resin such as a phenol resin, a furan resin, a polyimide resin.

The resulting mixture is heat-treated to prepare a heat-treated product.

The heat-treatment may be performed at about 800 °C to about 950 °C for about 1 hour to about 5 hours. The heat-treatment renders to locate the amorphous carbon precursor between the primary particles which are silicon nano particles on surface portions and surround the surface of the secondary particles.

The heat-treatment may be performed under an N₂ atmosphere, or an argon atmosphere. The heat-treatment under the above atmosphere may inhibit the oxidation of silicon and generation of SiC, and effectively prepare amorphous carbon, thereby reducing the resistance of the active material.

The heat-treated product, the amorphous carbon precursor, and the single-walled carbon nanotubes may be mixed in a first solvent and a second solvent. A mixing ratio of the heat-treated product and the mixture of the amorphous carbon precursor, and the single-walled carbon nanotubes may be about 99.99:0.01 to about 99.5:0.5 by weight ratio, about 99.99:0.01 to about 99.7:0.3 by weight ratio, about 99.99:0.01 to about 99.8:0.2 by weight ratio, or about 99.95:0.05 to about 99.8:0.2 by weight ratio. A mixing ratio of the heat-treated product and the amorphous carbon precursor may be about 90:10 to 96:4 by weight ratio. The mixing ratio of the heat-treated product and the amorphous carbon precursor within the range leads to densely fill inside, and thus, the side-reaction with an electrolyte may be reduced and the excellent expansion characteristics may be exhibited.

The first solvent is mixed with the second solvent. The first solvent may include ethanol, methanol, propanol, isopropanol, or the like, and the second solvent may include water, ethanol, or the like. A mixing ratio of the first solvent and the second solvent may be about 50:50 to about 10:90 by volume ratio. If the mixing ratio of the first solvent and the second solvent is satisfied into the range, the maximum effect for dispersing powder may be obtained.

The mixing may be performed for about 1 hour to about 5 hours. If the mixing is performed for the above times, a coating layer with a suitable thickness may be formed.

The resulting mixture is dried. The drying may be performed at about 50 °C to about 150 °C. The dried product is heat-treated to prepare a negative active material. According to the heat treatment, an active material in which the single-walled carbon nanotubes is coated on a surface of the silicon-carbon composite may be prepared, and the amorphous carbon precursor used for coating the single-walled carbon nanotubes is converted to amorphous carbon which may be presented on the surface of the silicon-carbon composite.

The heat-treatment may be performed at about 800 °C to about 950 °C for about 1 hour to about 5 hours. The heat-treatment may be performed under an N₂ atmosphere or an argon atmosphere. The heat-treatment under the condition may inhibit the oxidation of silicon and the generation of SiC and may firmly adhere the single-walled carbon nanotubes on the surface of the silicon-carbon composite.

A negative electrode according to another embodiment includes a current collector and a negative active material layer on at least one side of the current collector. The negative active material layer may consist of the negative active material and a binder. For example, the negative active material layer according to one embodiment consists of the negative active material and the binder, and does not separately include a conductive material. As described above, the single-walled carbon nanotubes included in the negative active material may serve as the conductive material and thus, it is unnecessary to use additional conductive material in a negative active material layer preparation.

Thus, if an amount of the single-walled carbon nanotubes based on the total 100 wt% of the negative active material layer is calculated and it is considered as an amount of the conductive material, it may be about 0.05 wt% to about 0.1 wt%, which is much smaller than the conventional amount of about 1 wt% to about 3 wt%.

The negative active material may further include a carbon-based active material, together with the active material according to one embodiment. The carbon-based active material may include artificial graphite, natural graphite, or combinations thereof.

If the carbon-based active material is included as the negative active material, the active material according to one embodiment and the carbon-based active material may be included at about 99.9:0.1 wt% to about 3:97 wt%, about 50:50 wt% to about 3:97 wt%, or about 40:60 wt% to about 4:96 wt%. If the mixing ratio of the active material according to one embodiment and the carbon-based active material is within the range, the volume expansion of the negative active material may be effectively suppressed and the conductivity may be further improved.

In the negative active material layer, an amount of the negative active material may be about 95 wt% to about 99 wt% based on the total 100 wt% of the negative active material layer. The amount of the negative active material refers to an amount of the active material according to one embodiment, and it refers to the total amount of the mixture of the active material according to one embodiment and the carbon-based active material, if the negative active material includes the active material according to one embodiment and the carbon-based active material.

The amount of the binder may be about 1 wt% to about 5 wt% based on the total 100 wt% of the negative active material layer.

The binder improves binding properties of negative active material particles with one another and with a current collector. The binder may be a non-aqueous binder, an aqueous binder, or a combination thereof.

The non-aqueous binder may be an ethylene propylene copolymer, polyacrylonitrile, polystyrene, polyvinylchloride, carboxylated polyvinylchloride, polyvinyl fluoride, polyurethane, polytetrafluoroethylene, polyvinylidene fluoride, polyethylene, polypropylene, polyamideimide, polyimide, or combinations thereof.

The aqueous binder may be a styrene-butadiene rubber (SBR), an acrylated styrene-butadiene rubber (ABR), an acrylonitrile-butadiene rubber, an acrylic rubber, a butyl rubber, a fluorine rubber, an ethylene oxide-containing polymer, polyvinyl pyrrolidone, polypropylene, polyepichlorohydrin, polyphosphazene, an ethylene propylene diene copolymer, polyvinylpyridine, chlorosulfonated polyethylene, latex, a polyester resin, an acrylic resin, a phenolic resin, an epoxy resin, polyvinyl alcohol, or combinations thereof.

If the aqueous binder is used as a negative electrode binder, a cellulose-based compound may be further used to provide viscosity as a thickener. The cellulose-based compound includes one or more of carboxymethyl cellulose, hydroxypropyl methyl cellulose, methyl cellulose, or alkali metal salts thereof. The alkali metal may be Na, K, or Li. The thickener may be included in an amount of about 0.1 parts by weight to about 3 parts by weight based on 100 parts by weight of the negative active material.

The current collector may include one selected from a copper foil, a nickel foil, a stainless steel foil, a titanium foil, a nickel foam, a copper foam, a polymer substrate coated with a conductive metal, and a combination thereof, but is not limited thereto.

Another embodiment provides a rechargeable lithium battery including the negative electrode, a positive electrode, and an electrolyte.

The positive electrode includes a current collector and a positive active material layer on the current collector.

The positive active material may include lithiated intercalation compounds that reversibly intercalate and deintercalate lithium ions. In embodiments, one or more composite oxides of a metal selected from cobalt, manganese, nickel, and a combination thereof, and lithium, may be used. In some embodiments, the compounds represented by one of the following chemical formulae may be used. LiₐA_{1-b}X_{b}D¹₂ (0.90≤a≤1.8, 0≤b≤0.5); LiₐA_{1-b}X_{b}O_{2-c1}D¹_{c1} (0.90≤a≤1.8, 0≤b≤0.5, 0≤c1≤0.05); LiₐE_{1-b}X_{b}O_{2-c1}D¹_{c1} (0.90≤a≤1.8, 0≤b≤0.5, 0≤c1≤0.05); LiₐE_{2-b}X_{b}O_{4-c1}D¹_{c1} (0.90≤a≤1.8, 0≤b≤0.5, 0≤c1≤0.05); LiₐNi_{1-b-c}Co_{b}X_{c}D¹_{α} (0.90≤a≤1.8, 0≤b≤0.5, 0≤c≤0.5, 0<α≤2); LiₐNi_{1-b-c}Co_{b}X_{c}O_{2-α}T_{α} (0.90≤a≤1.8, 0≤b≤0.5, 0≤c≤0.5, 0<α<2); LiₐNi_{1-b-c}Co_{b}X_{c}O_{2-α}T₂ (0.90≤a≤1.8, 0≤b≤0.5, 0≤c≤0.5, 0<α<2); LiₐNi_{1-b-c}Mn_{b}X_{c}D¹_{α} (0.90≤a≤1.8, 0≤b≤0.5, 0≤c≤0.5, 0<α≤2); LiₐNi_{1-b-c}Mn_{b}X_{c}O_{2-α}T_{α} (0.90≤a≤1.8, 0≤b≤0.5, 0≤c≤0.5, 0<α<2); LiₐNi_{1-b-c}Mn_{b}X_{c}O_{2-α}T₂ (0.90≤a≤1.8, 0≤b≤0.5, 0≤c≤0.5, 0<α<2); LiₐNi_{b}E_{c}G_{d}O₂ (0.90≤a≤1.8, 0≤b≤0.9, 0≤c≤0.5, 0.001≤d≤0.1); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); QO₂; QS₂; LiQS₂; V₂O₅; LiV₂O₅; LiZO₂; LiNiVO₄; Li_{(3-f)}J₂(PO₄)₃ (0≤f≤2); Li_{(3-f)}Fe₂(PO₄)₃ (0≤f≤2); LiₐFePO₄ (0.90≤a≤1.8)

In the above chemical formulas, A is selected from Ni, Co, Mn, or combinations thereof; X is selected from Al, Ni, Co, Mn, Cr, Fe, Mg, Sr, V, a rare earth element, or combinations thereof; D is selected from O, F, S, P, or combinations thereof; E is selected from Co, Mn, or combinations thereof; T is selected from F, S, P, or combinations thereof; G is selected from Al, Cr, Mn, Fe, Mg, La, Ce, Sr, V, or combinations thereof; Q is selected from Ti, Mo, Mn, or combinations thereof; Z is selected from Cr, V, Fe, Sc, Y, or combinations thereof; J is selected from V, Cr, Mn, Co, Ni, Cu, or combinations thereof; L¹ is selected from Mn, Al or combination thereof.

In one embodiment, the compounds may have a coating layer on the surface, or may be mixed with another compound having a coating layer. The coating layer may include at least one coating element compound selected from an oxide of a coating element, a hydroxide of a coating element, an oxyhydroxide of a coating element, an oxycarbonate of a coating element, or a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in a method having no adverse influence on properties of a positive active material by using these elements in the compound, and for example, the method may include any coating method such as spray coating, dipping, and the like, but is not illustrated in more detail since it is well-known in the related field.

In the positive electrode, an amount of the positive active material may be about 90 wt% to about 98 wt% based on the total weight of the positive active material layer.

In one embodiment, the positive active material layer may further include a binder and a conductive material. The amount of the binder and the conductive material may be about 1 wt% to about 5 wt%, respectively based on the total amount of the positive active material layer.

The binder improves binding properties of positive active material particles with one another and with a current collector. The examples of the binder may be polyvinyl alcohol, carboxymethyl cellulose, hydroxypropyl cellulose, diacetylcellulose, polyvinyl chloride, carboxylated polyvinylchloride, polyvinyl fluoride, an ethylene oxide-containing polymer, polyvinyl pyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, or the like, but is not limited thereto.

The conductive material is included to provide electrode conductivity, and any electrically conductive material may be used as a conductive material unless it causes a chemical change. Examples of the conductive material may be a carbon-based material such as natural graphite, artificial graphite, carbon black, acetylene black, ketjen black, a carbon fiber, and the like; a metal-based material of a metal powder or a metal fiber including copper, nickel, aluminium, silver, and the like; a conductive polymer such as a polyphenylene derivative; or mixtures thereof.

The current collector may be Al, but is not limited thereto.

The electrolyte includes a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), or the like. The ester-based solvent may include methyl acetate, ethyl acetate, n-propyl acetate, dimethyl acetate, methyl propionate, ethyl propionate, propyl propionate, decanolide, mevalonolactone, caprolactone, or the like. The ether-based solvent may include dibutyl ether, tetraglyme, diglyme, dimethoxyethane, 2-methyltetrahydrofuran, tetrahydrofuran, or the like. The ketone-based solvent may include cyclohexanone, and the like. The alcohol-based solvent may include ethyl alcohol, isopropyl alcohol, and the like, and examples of the aprotic solvent may include nitriles such as R-CN (where R is a C2 to C20 linear, branched, or cyclic hydrocarbon, or may include a double bond, an aromatic ring, or an ether bond), amides such as dimethylformamide, dioxolanes such as 1,3-dioxolane, sulfolanes, and the like.

The non-aqueous organic solvent may be used alone or in a mixture. When the non-aqueous organic solvent is used in a mixture, the mixture ratio may be controlled in accordance with a desirable battery performance.

The carbonate-based solvent may desirably include a mixture with a cyclic carbonate and a linear carbonate. The cyclic carbonate and linear carbonate are mixed together in a volume ratio of about 1:1 to about 1:9. When the mixture is used as an electrolyte, it may have enhanced performance.

The organic solvent may further include an aromatic hydrocarbon-based solvent as well as the carbonate-based solvent. The carbonate-based solvent and aromatic hydrocarbon-based solvent may be mixed together in a volume ratio of about 1:1 to about 30:1.

The aromatic hydrocarbon-based organic solvent may be an aromatic hydrocarbon-based compound represented by Chemical Formula 1.

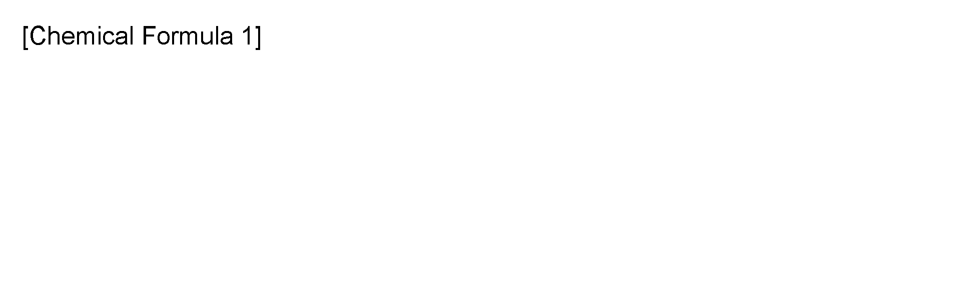

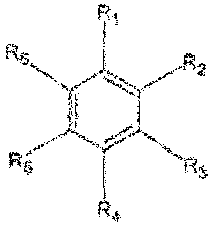

In Chemical Formula 1, R₁ to R₆ are the same or different and are selected from hydrogen, a halogen, a C1 to C10 alkyl group, a C1 to C10 haloalkyl group, and a combination thereof.

Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, or combinations thereof.

The electrolyte may further include vinylethyl carbonate, vinylene carbonate or an ethylene carbonate-based compound represented by Chemical Formula 2, as an additive for improving cycle life.

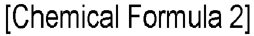

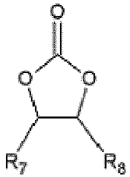

In Chemical Formula 2, R₇ and R₈ are the same or different and may be each independently hydrogen, a halogen, a cyano group (CN), a nitro group (NO₂), or a C1 to C5 fluoroalkyl group, provided that at least one of R₇ and R₈ is a halogen, a cyano group (CN), a nitro group (NO₂), or a C1 to C5 fluoroalkyl group, and R₇ and R₈ are not simultaneously hydrogen.

Examples of the ethylene carbonate-based compound may be difluoroethylene carbonate, chloroethylene carbonate, dichloroethylene carbonate, bromoethylene carbonate, dibromoethylene carbonate, nitroethylene carbonate, cyanoethylene carbonate, fluoroethylene carbonate, or the like. An amount of the additive for improving the cycle-life characteristics may be used within an appropriate range.

The lithium salt dissolved in an organic solvent supplies a battery with lithium ions, basically operates the rechargeable lithium battery, and improves transportation of the lithium ions between a positive electrode and a negative electrode. Examples of the lithium salt may include at least one supporting salt selected from LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide: LiFSI), LiC₄F₉SO₃, LiClO₄, LiAlO₂, LiAlCl₄, LiPO₂F₂, LiN(CₓF₂ₓ₊₁SO₂)(C_{y}F_{2y+1}SO₂), where x and y are natural numbers, for example, an integer of about 1 to about 20, LiCl, Lil, LiB(C₂O₄)₂(lithium bis(oxalato) borate: LiBOB) and lithium difluoro(oxalato)borate (LiDFOB). A concentration of the lithium salt may range from about 0.1 M to about 2.0. If the lithium salt is included at the above concentration range, an electrolyte may have excellent performance and lithium ion mobility due to optimal electrolyte conductivity and viscosity.

A separator may be disposed between the positive electrode and the negative electrode depending on a type of a rechargeable lithium battery. The separator may use polyethylene, polypropylene, polyvinylidene fluoride or multilayers thereof having two or more layers and may be a mixed multilayer such as a polyethylene/polypropylene double-layered separator, a polyethylene/polypropylene/polyethylene triple-layered separator, a polypropylene/polyethylene/polypropylene triple-layered separator, and the like.

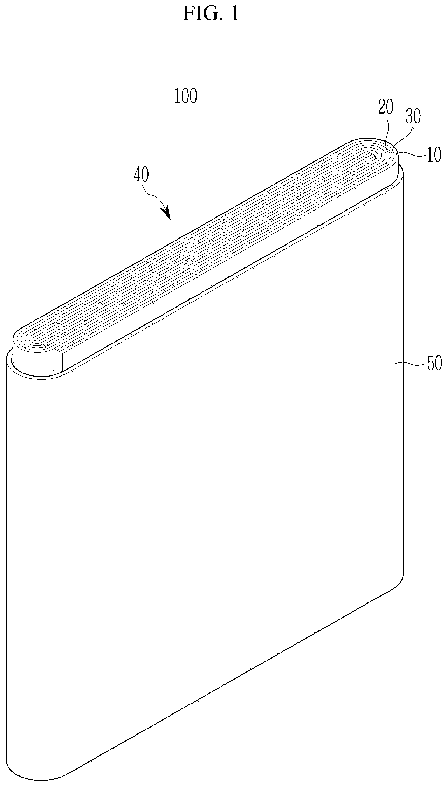

FIG. 1 is an exploded perspective view of a rechargeable lithium battery according to one embodiment. The rechargeable lithium battery according to an embodiment is illustrated as a prismatic battery but is not limited thereto and may include variously-shaped batteries such as a cylindrical battery, a pouch battery, and the like.

Referring to FIG. 1, a rechargeable lithium battery 100 according to one embodiment may include an electrode assembly 40 manufactured by winding a separator 30 disposed between a positive electrode 10 and a negative electrode 20 and a case 50 housing the electrode assembly 40. An electrolyte (not shown) may be impregnated in the positive electrode 10, the negative electrode 20 and the separator 30.

Hereinafter, examples of the present invention and comparative examples are described. These examples, however, are not in any sense to be interpreted as limiting the scope of the invention.

### (Example 1)

An ethanol solvent and silicon particles having a particle diameter of several micrometers were mixed at a 1:9 weight ratio and a silicon nano dispersed liquid was prepared by using a beads mill (Netzch, Germany).

Artificial graphite was added to the silicon nano dispersed liquid in order to have a weight ratio of silicon and artificial graphite to be 9:1, primarily agitated and spray-dried at 150 °C using a spray-drier to prepare a Si precursor.

The Si precursor was mixed with meso pitch at a 50:50 weight ratio and the mixture was heat-treated at 900 °C under an N₂ atmosphere to prepare a silicon-carbon composite. The silicon-carbon composite included an agglomerated product which is secondary particles in which artificial graphite and silicon nano particles were agglomerated and a soft carbon coating on the agglomerated product, and based on the total weight of the silicon-carbon composite, an amount of the artificial graphite was 40 wt% and the amount of the amorphous carbon was 20 wt%.

The prepared silicon-carbon composite, mesopitch, and the single-walled carbon nanotubes (average length: 1 µm to 10 µm) were mixed at a 95:4.95:0.05 weight ratio in a mixed solvent of water and ethanol (3:1 by volume ratio), agitated for 2 hours, and dried in an oven at 100 °C to prepare a dried product.

The resulting dried product was heat-treated at 900 °C under an N₂ atmosphere to prepare a negative active material. In the prepared negative active material, the surface of the silicon-carbon composite was coated with the single-walled carbon nanotubes at a thickness of 0.2 µm to 0.5 µm.

Using the negative active material as a first negative active material and natural graphite as a second negative active material, the first negative active material, the second negative active material, a styrene butadiene rubber binder, and a carboxymethyl cellulose thickener were mixed in a water solvent at 10: 87.5:1:1.5 by weight ratio to prepare a negative active material slurry.

The negative active material slurry was coated on a Cu foil current collector, dried, and pressurized under a general technique to prepare a negative electrode including the current collector and a negative active material layer on the current collector. The prepared negative active material layer had a loading level of 7.0 mg/cm², and a density of an active mass (refers as a negative active material layer) was 1.67g/cm³.

The negative electrode, a LiCoO₂ positive electrode, and an electrolyte were used to fabricate a rechargeable lithium cell (full cell) with a specific capacity of 500 mAh/g. The electrolyte was used by dissolving 1.5 M LiPF₆ in a mixed solvent of ethylene carbonate, ethylmethyl carbonate, and dimethyl carbonate (a volume ratio of 20:10:70).

### (Example 2)

A negative active material was prepared by the same procedure as in Example 1, except that a mixing ratio of the silicon-carbon composite, mesopitch, and the single-walled carbon nanotubes was changed into 95:4.9:0.1 by weight ratio. In the prepared negative active material, the surface of the silicon-carbon composite was coated with the single-walled carbon nanotubes at a thickness of 0.2 µm to 0.5 µm. As the used amount of the single-walled carbon nanotubes was increased compared to Example 1, a surface area of the silicon-carbon composite coated with the single-walled carbon nanotubes was increased.

The negative active material was used as a first negative active material to fabricate a rechargeable lithium cell having a specific capacity of 500 mAh/g, as the same procedure as in Example 1.

### (Example 3)

A negative active material was prepared by the same procedure as in Example 1, except that a mixing ratio of the silicon-carbon composite, mesopitch, and the single-walled carbon nanotubes was changed into 95:4.8:0.2 by weight ratio. In the prepared negative active material, the surface of the silicon-carbon composite was coated with the single-walled carbon nanotubes at a thickness of 0.2 µm to 0.5 µm. As the used amount of the single-walled carbon nanotubes was increased compared to Example 1, a surface area of the silicon-carbon composite coated with the single-walled carbon nanotubes was increased.

The negative active material was used as a first negative active material to fabricate a rechargeable lithium cell having a specific capacity of 500 mAh/g, by the same procedure as in Example 1.

### (Comparative Example 1)

A rechargeable lithium cell having a specific capacity of 500 mAh/g was fabricated by the same procedure as in Example 1, except that the silicon-carbon composite according to Example 1 was used as a first negative active material.

### (Comparative Example 2)

The prepared silicon-carbon composite, mesopitch, and acetylene black were mixed in a mixed solvent of water and ethanol (3:1 by volume ratio) at 95:4.9:0.1 by weight ratio, agitated for 2 hours, and dried in an oven at 100 °C to prepare a dried product.

The resulting dried product was heat-treated at 900 °C under an N₂ atmosphere to prepare a negative active material.

Using the negative active material as a first negative active material and natural graphite as a second negative active material, the first negative active material, the second negative active material, a styrene butadiene rubber binder, and a carboxymethyl cellulose thickener were mixed in a water solvent at 10: 87.5:1:1.5 by weight ratio to prepare a negative active material slurry. The negative active material slurry was used to fabricate a negative electrode and a rechargeable lithium cell having a specific capacity of 500 mAh/g by the same procedure as in Example 1.

### (Comparative Example 3)

SiOₓ (x=1.1), mesopitch, a single-walled carbon nanotubes (average length: 1 µm to 10 µm) were mixed in a mixed solvent of water and ethanol (3:1 by volume ratio) at a weight ratio of 95:4.5:0.5, agitated for 2 hours, and dried in an oven at 100 °C to prepare a dried product.

The resulting dried product was heat-treated at 900 °C under an N₂ atmosphere to prepare a negative active material.

The negative active material was used as a first negative active material to fabricate a negative electrode and a rechargeable lithium cell having a specific capacity of 500 mAh/g, as the same procedure as in Example 1.

### (Comparative Example 4)

Using the silicon-carbon composite according to Example 1 as a first negative active material and natural graphite as a second negative active material, the first negative active material, the second negative active material, the single-walled carbon nanotubes (average length: 1 µm to 10 µm), and a mixture of a styrene butadiene rubber binder and a carboxymethyl cellulose thickener were mixed in a water solvent at a weight ratio of 9.99:87.5:0.01:2.5 to prepare a negative active material slurry.

The negative active material slurry was used to fabricate a negative electrode and a rechargeable lithium cell having a specific capacity of 500 mAh/g by the same procedure as in Example 1.

### (Comparative Example 5)

The prepared silicon-carbon composite, petroleum pitch, and acetylene black were mixed in a mixed solvent of water and ethanol (3:1 by volume ratio) at 95:4.9:0.1 by weight ratio, agitated for 2 hours, and dried in an oven at 100 °C to prepare a dried product.

The resulting dried product was heat-treated at 900 °C under an N₂ atmosphere to prepare a negative active material.

Using the negative active material as a first negative active material and natural graphite as a second negative active material, the first negative active material, the second negative active material, a styrene butadiene rubber binder, and a carboxymethyl cellulose thickener were mixed in a water solvent at 10: 87.5:1:1.5 by weight ratio to prepare a negative active material slurry.

The negative active material slurry was used to fabricate a negative electrode and a rechargeable lithium cell having a specific capacity of 500 mAh/g by the same procedure as in Example 1.

### (Comparative Example 6)

A negative electrode and a rechargeable lithium cell having a specific capacity of 500 mAh/g were fabricated by the same procedure as in Example 1, except that a multi-walled carbon nanotubes (average length: 5 µm to 20 µm) was used instead of using the single-walled carbon nanotubes (average length: 1 µm to 10 µm).

### Experimental Example 1) Efficiency characteristic

The rechargeable lithium cells according to Examples 1 to 3 and Comparative Examples 1 to 6 were charged and discharged at 0.2 C once and a ratio of discharge capacity relative to charge capacity was measured. The results are shown in Table 1, as efficiency.

### Experimental Example 2) Cycle-life characteristic

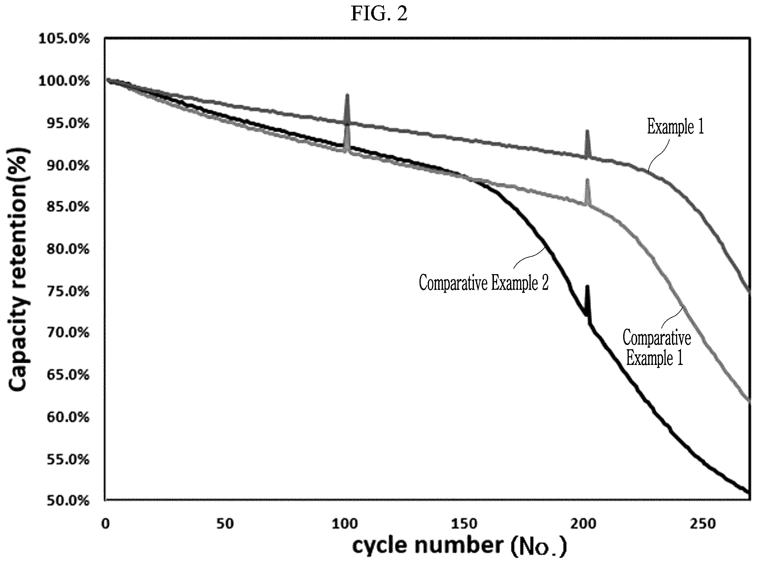

The rechargeable lithium cells according to Examples 1 to 3, and Comparative Examples 1 to 6 were charged and discharge at 1 C for 300 cycles. A ratio of discharge capacity at each cycle relative to discharge capacity at 1^{st} cycle was calculated. From the results, the ratio of discharge capacity at 200^{th} cycle relative to discharge capacity at 1^{st} cycle are shown in Table 1, as capacity retention. From the results, the capacity retention when the cells according to Example 1 and Comparative Examples 1 and 2 were charged and discharged for 300 cycles, are shown in FIG. 2.

### Experimental Example 3) High-rate capability characteristic

The rechargeable lithium cells according to Examples 1 to 3 and Comparative Examples 1 to 6 were charged and discharged at 0.2 C once and charged and discharged at 2 C once,

A ratio of discharge capacity at 2 C relative to discharge capacity at 0.2 C was measured. The results are shown in Table 1, as a chargeability.

**Table 1**

| | Specific capacity (mAh/g) | Efficiency (%) | Cycle-life characteristic (200 cycle, %) | Chargeability (2C/0.2C, %) |
|---|---|---|---|---|
| Example 1 | 1460 | 84.0 | 91 | 41 |
| Example 2 | 1440 | 84.6 | 92.5 | 45 |
| Example 3 | 1400 | 85.5 | 93 | 47 |
| Comparative Example 1 | 1470 | 82.5 | 73 | 31 |
| Comparative Example 2 | 1465 | 83.5 | 85 | 35 |
| Comparative Example 3 | 1600 | 78.1 | 80 | 30 |
| Comparative Example 4 | 1460 | 84.0 | 88 | 38 |
| Comparative Example 5 | 1470 | 82.0 | 70 | 30 |
| Comparative Example 6 | 1460 | 84.0 | 85 | 36 |

As shown in Table 1 and FIG. 2, Examples 1 to 3 exhibited excellent efficiency, cycle-life characteristic, and chargeability.

Whereas, Comparative Example 1 using the silicon-carbon composite as the first negative active material, exhibited all low efficiency, cycle-life characteristics, and chargeability. Comparative Example 2 using the silicon-carbon composite coated with acetylene black as the first negative active material exhibited good efficiency, but the deteriorated cycle-life characteristic and chargeability.

While this disclosure has been described in connection with what is presently considered to be practical example embodiments, it is to be understood that the invention is not limited to the disclosed embodiments, but, on the contrary, is intended to cover various modifications and equivalent arrangements included within the scope of the appended claims.

## Claims

1. A negative active material for a rechargeable lithium battery, comprising
a silicon-carbon composite in which crystalline carbon, silicon particles, and amorphous carbon are agglomerated; and
single-walled carbon nanotubes coated on the silicon-carbon composite.

2. The negative active material for a rechargeable battery as claimed in claim 1, wherein the single-walled carbon nanotubes continuously coat the surface of the silicon-carbon composite.

3. The negative active material for a rechargeable battery as claimed in claim 1, wherein the single-walled carbon nanotubes discontinuously coat the surface of the silicon-carbon composite.

4. The negative active material for a rechargeable lithium battery as claimed in any one of claims 1 to 3, wherein the single-walled carbon nanotubes are present in an amount of about 0.01 wt% to about 0.5 wt% based on 100 wt% of the total weight of the negative active material.

5. The negative active material for a rechargeable lithium battery as claimed in any one of claims 1 to 4, wherein the amount of single-walled carbon nanotubes is about 0.02 wt% to about 0.5 wt% based on 100 wt% of the total weight of the negative active material.

6. The negative active material for a rechargeable lithium battery as claimed in any one of claims 1 to 5, wherein the amount of single-walled carbon nanotubes is about 0.05 wt% to about 0.5 wt% based on 100 wt% of the total weight of the negative active material.

7. The negative active material for a rechargeable lithium battery as claimed in any one of claims 1 to 6, wherein the single-walled carbon nanotubes have an average length of about 0.5 µm to about 10 µm.

8. The negative active material for a rechargeable lithium battery as claimed in any one of claims 1 to 7, wherein the single-walled carbon nanotubes have an average length of about 0.5 µm to about 5 µm.

9. The negative active material for a rechargeable lithium battery as claimed in any one of claims 1 to 8, wherein the single-walled carbon nanotubes have an average length of about 0.5 µm to about 3 µm.

10. The negative active material for a rechargeable lithium battery as claimed in any one of claims 1 to 9, wherein the single-walled carbon nanotubes are coated on a surface of the silicon-carbon composite at a thickness of about 0.2 µm to about 10 µm.

11. The negative active material for a rechargeable lithium battery as claimed in any one of claims 1 to 10, wherein the single-walled carbon nanotubes are coated on a surface of the silicon-carbon composite at a thickness of about 0.2 µm to about 8 µm.

12. The negative active material for a rechargeable lithium battery as claimed in any one of claims 1 to 11, wherein the single-walled carbon nanotubes are coated on a surface of the silicon-carbon composite at a thickness of about 0.2 µm to about 4 µm.

13. The negative active material for a rechargeable lithium battery as claimed in any one of claims 1 to 12, wherein the silicon-carbon composite comprises agglomerated products in which the crystalline carbon and the silicon particles are agglomerated and the amorphous carbon is between and/or covers a surface of the agglomerated products.

14. A negative electrode for a rechargeable lithium battery, comprising:
a negative active material layer including a negative active material and a binder, wherein the negative active material comprises the negative active material of any one of claims 1 to 13; and
a current collector supporting the negative active material layer.

15. A rechargeable lithium battery, comprising:
the negative electrode of claim 14;
a positive electrode; and
an electrolyte.
